# EUROPEAN PATENT APPLICATION

(11) **EP 0 645 868 A2**
(43) Date of publication of application: **29.03.1995**
(21) Application number: 94115027.8
(22) Date of filing: 23.09.1994
(51) Int. Cl.: H02J 7/10, B62J 6/00, G01C 22/00

(54) **Charging apparatus**

(30) Priority: 24.09.1993 JP 261725/93
(71) Applicant: CASIO COMPUTER CO., LTD., Shinjuku-ku, Tokyo 163-02 (JP)
(72) Inventor: Maeshima, Jun, c/o Casio Computer Co., Ltd., Hamura-shi, Tokyo, 205 (JP)
(74) Representative: Grünecker, Kinkeldey, Stockmair & Schwanhäusser Anwaltssozietät

(57) **Abstract**

A charging apparatus includes a magnetic piece (14)attached to a wheel (12) of a vehicle (11) for rotation together with the wheel, and a battery powered device (16) for detecting rotation of the magnetic piece. The device includes an induction coil (19). As the rotating magnet passes by the coil, an electromotive force is induced in the coil by electromagnetic induction. The induced electromotive force indicates the passing of the magnet and is used for computing the speed or travelled distance of the vehicle. The same electromotive force is also used for charging a storage battery (24). This arrangement eliminates the need of replacing the battery and preserves the operation of the battery-powered device.

## Description

The present invention relates to apparatus for detecting and displaying a running condition of a vehicle by detecting rotation of a magnetic piece attached to a wheel of the vehicle. More particularly the invention pertains to such an apparatus capable of charging a storage battery by the magnetic piece rotation.

Wheeled vehicles running on a road or rails include a bicycle, automoble, electric car or train etc. Computer-based running condition detecting apparatus are known which detect or compute a running condition of the vehicle (e.g., vehicle speed, travelled distance). Particularly, when applied to the bicycle, such a running condition detecting apparatus is called "cycle computer."

For example, in the cycle computer, a magnet is mounted on one of spokes of a front wheel while a magnetic detector is fixed to a fork blade to detect passing of the magnet.

In the prior art, a reed switch has been used as the magnetic detector. The reed switch is normally kept in an OFF condition. When the magnet passes by the reed switch as the wheel rotates, the reed switch is turned ON. Thus it generates a magnet detection signal (reed switch signal) every one revolution of the wheel. The number of revolutions of the wheel per unit time is measured from the detection signal. The cycle computer CPU computes a travelled distance and/or a speed of the bicycle by multiplying the detected number of revolutions of the wheel by wheel circumference data previously stored. A display device such as a liquid crystal display device (LCD) displays the computed results.

Further, a primary battery (e.g., dry cells) has been used as a power source for the prior art cycle computer.

In this manner, the prior art running condition detecting apparatus or cycle computer detects the number of revolutions of the wheel, and computes and displays the travelled distance and/or speed of the vehicle therefrom.

Since it employs the primary battery as the power source the prior art cycle computer has the problem of the battery power consumption. Once the battery power has been comsumed, no further running condition can be detected.

To avoid this, it is necessary for the user to replace the battery to a new one before its power is used up. The user must regularly check the condition of the battery.

An object of the present invention is to provide a charging apparatus capable of detecting the running condition of a vehicle without the need of relacing the battery.

In accordance with the present invention, there is provided a charging apparatus which comprises a magnetic piece attached to a wheel of a vehicle, induction means magnetically coupled with the magnetic piece for operatively generating electromagnetic induction, rotation detector means for detecting rotation of the wheel from an electric signal of the electromagnetic induction, a rechargeable battery for supplying electric power to the rotation detector means, and charging circuit means for charging the rechargeable battery with electric energy of the electromagnetic induction.

With this arrangement, no replacement of the battery is required since a rechargeable or storage battery is used and charged by the electric energy of the electromagnetic induction generated during the operation of the vehicle. The user does not have to check the battery condition.
Fig.1 is a side elevational view of a bicycle to which a first embodiment of the present invention is applied;
Fig.2 is a block diagram of a cycle computer incorporating a charging apparatus of the first embodiment of the present invention;
Fig.3 is an external view of the cycle computer in accordance with a second embodiment of the present invention, employing a rotation detector separated from an operation and display device.
Fig.4 is a circuit diagram of the rotation detector of Fig.3;
Fig.5 is a block diagram of the operation and display device of Fig.3; and
Fig.6 is a block diagram of a modified detector incorporating selective battery charging control depending on the velocity speed.

The present invention will now be described in connection with embodiments with reference to the accompanying drawings.

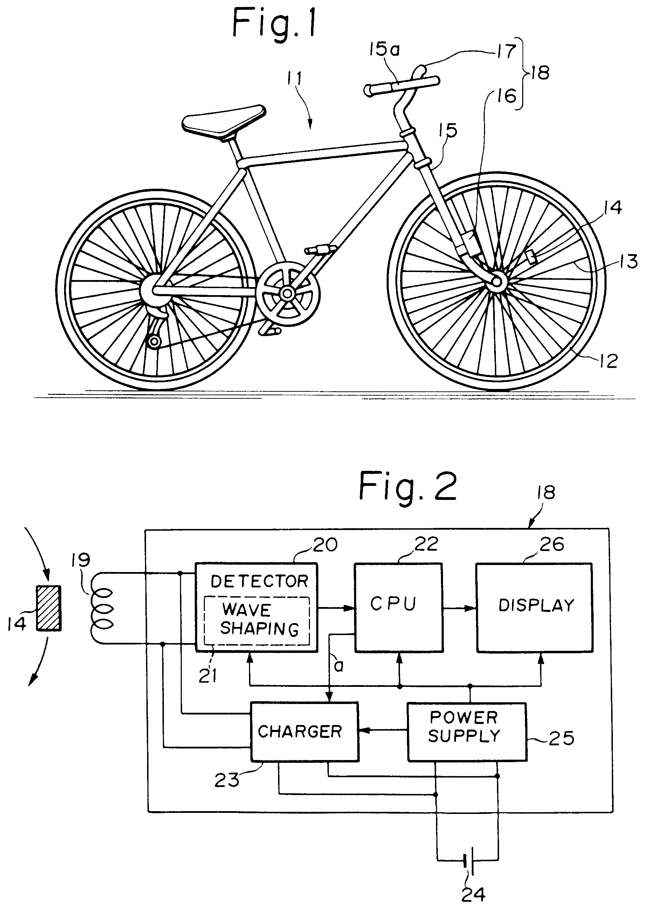

Fig.1 shows a side elevational view of a bicycle 11 to which the cycle computer of the first embodiment is applied. A magnet 14 is attached to one of spokes 13 of a front wheel 12 of the bicycle 11. A rotation detector 16 is secured to a fork blade of a body 15 of the bicycle 11. The detector 16 is disposed in or by a rotating path of the magnet 14. Further, an operation and display device 17 is mounted on a handle 15a. The device 17 computes and displays running condition of the bicycle such as travelled distance and/or running speed of the bicycle from rotation information of the wheel detected by the rotation detector 16.

A wire or cable (not shown) connects the rotation detector 16 to the operation and display device 17 for signal and power communication.

Fig.2 shows a block diagram of the cycle computer 18 incorporating the charging feature of the first embodiment. The cycle computer 18 of Fig.2 is constituted by the rotation detector 16 and the operation and display device 17 of Fig.1. They are integrally connected by a cable or wire.

In Fig.2, a rotation detecting coil 19 is placed in or by the rotating path of the magnet 14 so that, when the front wheel 12 rotates, a magnetic field of the rotation detecting coil 19 changes as the magnet 14 passes by the coil 19. The magnetic change induces an electromotive force across the rotating detecting coil 19.

In this manner, the rotation detecting coil 19 defines an induction means which is magnetically coupled with a magnetic piece or magnet and operatively generates electromagnetic induction.

A detector 20 includes a switching transistor of MOS (Metal Oxide Semiconductor) type. The output voltage signal of the coil 19 indicates passing of the magnet 14. The signal is applied to the MOS transistor gate, causing the MOS transistor to turn on. The MOS transistor output signal thus generated is supplied to a wave shaping circuit 21 in the detector 20. The wave shaping circuit 21 generates a wave-shaped or pulsed signal (rotation signal) which is then supplied to CPU 22.

The CPU 22 includes a program ROM (not shown) and a RAM (not shown). CPU computes the running condition of the bicycle 11 by executing the program stored in the program ROM, using various parameters stored in RAM and the rotation signal, and displays the computed results on a display 26. Specifically, CPU 22 computes or measures the travelled distance and speed of the bicycle 11 from the rotation signal. Since the rotation signal occurs once per one revolution of the wheel, multiplying the time interval measured from a rotation signal to the next by the wheel circumference (stored in RAM) yields the speed of the bicycle 11. The travelled distance may be computed by multiplying the count of the rotation signal pulses counted during the travelled time by the wheel circumference. Under the control of CPU 22, the display 27 visually indicates the running condition (speed and/or travelled distance).

A charger 23 has an input connected across the rotation detecting coil 19 and an output connected across a rechargeable battery 24. In accordance with the invention, the rotation detecting coil 19 (induction means) rather than a magnetic reed switch is employed to detect passing of the magnet 14. This makes it possible to use the output signal of the coil 19 for two different purposes. First, the output signal of the coil 19 is used by CPU 22 through the detector 20 to measure the running condition of the bicycle or vehicle. Second, the same signal is also used as electric energy to charge the rechargeable battery 24 by means of the charger 23.

In accordance with the first embodiment, the charger 23 charges the battery 24 only when the bicycle 11 or vehicle runs at a relatively high speed. To this end, CPU 22 controls the charger 23 by supplying a signal a when it detects a vehicle speed greater than a predetermined value. Thus, when the bicycle speed is relatively low, the charger 23 does not charge the battery 24. The reason for the charging control is as follows. For the battery charging, an electric current flows in the rotation coil 19. The current serves to prevent or brake the rotation of the wheel 12 by reacting on the magnet 14 on the wheel 12. Thus, when the driving load on the vehicle or bicycle 11 is relatively heavy e.g., when the bicycle 11 is ascending a slope or moving on an unpaved road at a relatively low speed, CPU 22 inhibits the charger 23 from charging the rechargeable battery 24.

In this manner, the rechargeable battery 24 is charged through the charger 23. The charged battery 24 supplies electric power to various components of the cycle computer 18 through a power supply 25.

An operation of the cycle computer of the first embodiment will now be described.

When the bicycle 11 starts running the magnet 14 attached to a spoke 13 of the front wheel 12 is rotated.

In Fig.2, each time when the magnet 14 passes by the coil 19, it induces a voltage across the rotation detecting coil 19 by electromagnetic induction. The induced voltage applies to the gate of the MOS transistor in the detector 20, thus turning on the transistor. The output signal of the MOS transistor is wave-shaped by the wave shaping circuit 21, into a pulsed rotation signal. The pulsed rotation signal is supplied to CPU 22. CPU 22 measures the pulse interval from a rotation signal pulse to the next and counts the rotation signal pulses having received. Then CPU 22 computes the current vehicle speed (per hour) by (3600 × wheel circumference/pulse interval), and the travelled distance by (pulse count × wheel circumference).

In this manner, the cycle computer 18 measures or computes the running condition of the bicycle from the rotational information of the front wheel.

The running condition of the bicycle is displayed on the liquid crystal display 26 under the control of CPU 22.

At the same time, the charging feature of the cycle computer 18 charges the battery as follows.

The rotation detecting coil 19 detects passing of the magnet 14 by electromagnetic induction. The electromotive force induced in the coil 19 from the rotating magnet 14 is supplied to the charger 23. The charger 23 charges the rechargeable battery 24 with the electromotive force induced in the coil 19. The charger battery 24 supplies the electric power to various components of the cycle computer 18 through the power supply 25.

In this manner, the charging apparatus of the first embodiment charges the rechargeable battery 24 while computing the running condition of the bicycle. The rechargeable battery 24 is used as a common power source for various components of the cycle computer 18. Thus, replacing battery is not required, and the risk of exhaustion of the battery can be prevented.

Further, in consideration of the fact that the battery charging increases the pedalling load on the bicycle, the charging apparatus of the first embodiment selectively charges the battery only when the bicycle is running at a relatively high speed with a relatively light driving load, as in pedalling on a flat road or descending a slope. The apparatus inhibites the battery charging when the bicycle is running at a relatively low speed with a relatively heavy pedalling load, as in the case of ascending a slope or driving on an unpaved road. In this manner, the charging apparatus of the first embodiment optimally controls the battery charging without essentially increasing the pedalling load on the part of the bicyclist.

A second embodiment of the invention will now be described. The second embodiment is applied to the bicycle 11 of Fig.1 as the first embodiment.

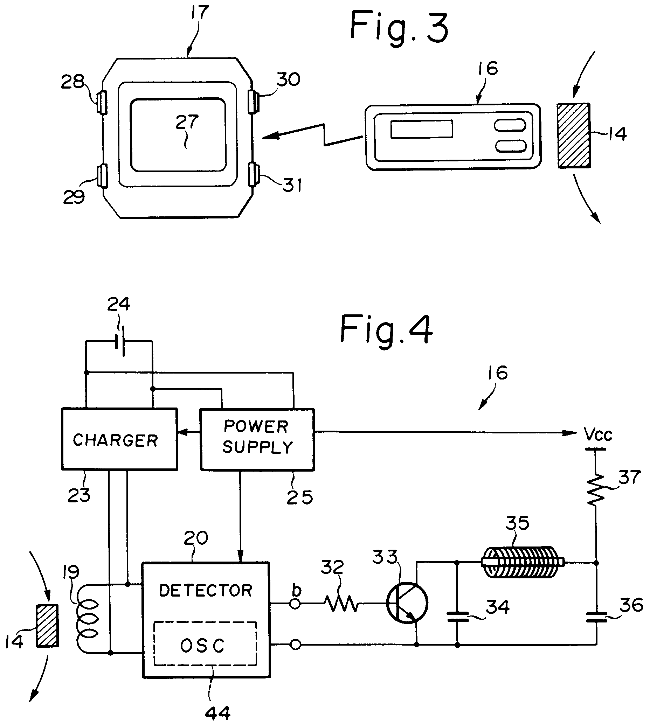

Fig.3 shows an external view of a cycle computer of the second embodiment. The cycle computer has two separate components i.e., rotation detector 16, and operation and display device 17. Radio communication is employed to send a rotation signal from the rotation detector 16 to the operation and display device 17. The rotation detector 16, and the operation and display device 17 are independently powered by their own batteries.

In Fig.3, the rotation detector 16 detects the rotation signal of the front wheel from magnet 14. The rotation detector 16 includes a radio transmitter which sends the rotation signal to a receiver in the operation and display device 17. The operation and display device 17 computes the running condition of the bicycle 11 (e.g., vehicle speed, travelled distance) from the rotation signal, and displays the results on a liquid crystal display device (LCD) 27. The operation and display device 17 has a plurality of keys arranged in its periphery, such as data entry key 28 for inputting data (e.g., weight of bicycle and driver) start key 29, and key 30 and second data entry key 31 for entering data (e.g., circumference of the front wheel).

Fig. 4 is a block and circuit diagram of the rotation detector 16 of the second embodiment. In Fig.4, a rotation detecting coil 19, a charger 23, a rechargeable battery 24 and a power supply 25 are the same as those shown in Fig.2 and, therefore, their description will be omitted.

A detector 20 incorporates an oscillator 44. When the rotating magnet 14 passes by the coil 19, a voltage is induced across the coil 19 by electromagnetic induction. The induced voltage is applied to a gate of a MOS transistor in the detector 20, turning on the transistor. The MOS transistor output signal is supplied to the oscillator 21. Then, the oscillator 21 generates successive clock signal pulses b for a short period. The clock signal pulses b are applied to the base of an NPN transistor 31 through a resistor 32. A capacitor 34 is connected across the collector and emitter of the transistor 33. The collector of the transistor 33 is connected to one end of an electromagnetic induction coil 35. The emitter of the transistor 33 is connected to the detector 20 ground. A voltage Vcc is applied to the other end of the electromagnetic induction coil 35 through a resistor 37. A capacitor 36 connects the other end of the induction coil 35 to the emitter of the transistor 33. The circuit elements 32-37 constitute a radio transmitter in which the induction coil 35 combined with the capacitors 34 and 36 forms an LC oscillator emitting a radio signal. Thus, in response to the clock signal pulses from the detector 20, the transistor 33 repeats switchings between on and off states for a short period. As a result, the LC osillator oscillates at its radio resonant frequency so that the induction coil 35 emits a radio signal. The radio signal indicates passing of the magnet 14.

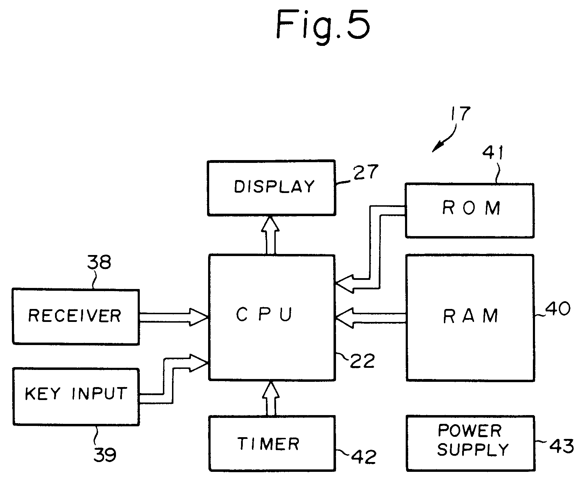

Fig.5 is a block diagram of the operation and display device 17 of the second embodiment. In Fig.5, a receiver 38 receives radio signal from the transmitter in the rotation detector 16. The receiver 38 includes a turning circuit (not shown) formed by an electromagnetic induction coil (not shown) and a capacitor (not shown) in parallel connection. A wave shaping circuit (not shown) in the receiver 38 wave-shapes the received signal into a pulse. The received and pulsed signal (received rotation signal pulse) is then supplied to CPU 22. It is noted that the received rotation signal pulse indicates the passing of the magnet 14, and thus occurs per one revolution of the wheel 12.

CPU 22 counts the rotation signal pulses and measures their time interval for computation of the rotation condition of the bicycle 11.

A key input device 39 comprises the data input key 28, start key 29, end key 30 and input key 31 shown in Fig.3. A RAM 40 stores data and parameters (e.g., wheel circumference) entered from the key input device 39. The stored data and parameters are used by CPU 22 for computing the vehicle running condition (e.g., speed, travelled distance).

ROM 41 stores a program for controlling CPU 22 of the cycle computer.

A timer 42 is constituted by a crystal oscillator and a frequency divider circuit which frequency-divides a crystal output signal into a time signal. The CPU 22 receives the time signal for time management of the cycle computer (e.g., for measuring the time of receiving the rotation signal pulse).

CPU 22 displays the computed running condition on the display 27.

A power supply 43 supplies electric power to various components of the operation and display device 17. The power supply 43 includes a dry battery.

An operation of the cycle computer of the second embodiment will now be described.

As the bicycle 11 starts running, the front wheel rotates. Each time when the magnet 14 passes by the rotation detecting coil 19, a voltage is induced across the rotation detecting coil 19 and turns on the MOS transistor in the detector 20. This causes the oscillator 21 in the detector 20 to generate clock signal pulses b for a short period. The clock signal pulses repeatedly switches the NPN transistor 33 off and on. This leads to the induction coil 35 of the transmitter to radiate a radio signal. The radio signal indicates passing of the magnet 14 by the coil 19 and occurs per one revolution of the wheel 12.

In the operation and display device 17, the receiver 38 receives the radio signal from the transmitter in the rotation detector 16 by means of its electromagnetic coil (not shown), and processes it into a rotation signal pulse. The rotation signal pulse is supplied to CPU 22.

CPU 22 counts the rotation signal pulses and measures their pulse interval. Using the pulse count and pulse interval as well as stored data in RAM 40 such as wheel circumference, CPU 22 computes the running condition of the bicycle 11 (e.g., speed and travelled distance), and displays the results on the display 27.

In the rotation detector 16, the electromagnet induction generated in the coil 19 is also used for battery charging. The charger 23 charges the rechargeable battery 24 with the electric energy of the electromagnetic induction from the coil 17. The rechargeable battery 24 charged in this way supplies electric power to various components of the rotation detector 16 through the power supply 25.

In this manner, the charging apparatus of the second embodiment advantageously charges the rechargeable battery 24 while at the same time detecting the rotation of the front wheel by the rotation detector 16. This eliminates the need of replacing the rechargeable battery 24 and preserves the operative condition of the battery and the rotation detector 16.

This concludes the detailed description. However, various modifications will be obvious to a person having an ordinal skill in the art.

For example, in the arrangement of Fig.4, the detector 20 may be modified such that it controls battery charging depending on the speed of the bicycle.

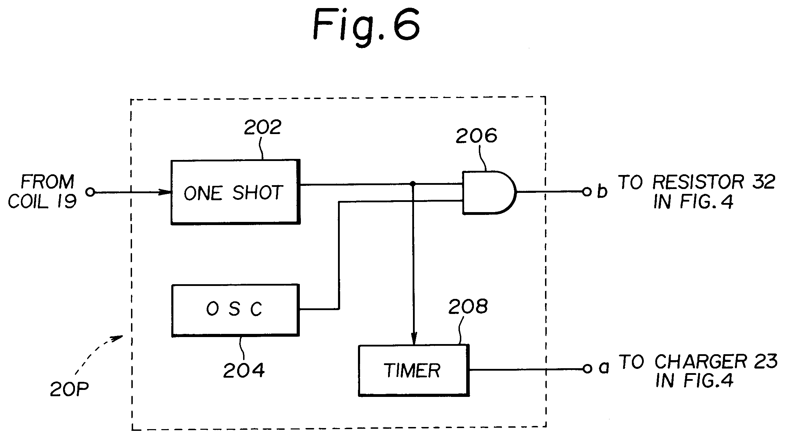

Fig.6 shows a block diagram of a modified detector 20P incorporating a battery charging control feature.

In Fig.6, the detector 20P includes a one shot circuit 202 which generates a one shot pulse in response to the signal from the induction coil 19. The one shot pulse is supplied to a first input to AND gate 206. The AND gate 206 has a second input which receives clock signal pulses from an oscillator 204. Thus, the AND gate 206 outputs the clock signal pulses b during the period of one shot pulse. The output clock signal pulses b are supplied to the base of the transistor 33 (Fig.4) through the resistor 32.

The one shot circuit 202 is also connected to a timer 208. The timer 208 measures the time interval between one shot pulses. The timer 208 starts time counting after receiving a one shot pulse. The timer 208 count at the time of receiving a one shot pulse indicates the time interval. If the time interval is relatively short, this means that the bicycle 11 is running at a relatively high speed. When the bicycle 11 speed is relatively slow, a relatively long time interval will be observed between one shot pulses. The timer 208 outputs a charging control signal a which is supplied to the charger 23 in Fig.4 for battery charging control. When the timer 208 count is smaller than a predetermined value, indicating a relatively high speed of the bicycle 11, the charging control signal a enables the charger 23 to charge the battery 24 with electric energy induced in the coil 19. When the timer 208 count exceeds the predetermined value, indicating a relatively low speed of the bicycle 11, the charging control signal a is switched to inhibit the charger 23 from charging the battery 24.

Therefore, the scope of the invention should be limited only by the appended claims.

## Claims

1. A charging apparatus (18) comprising a magnetic piece (14) attached to a wheel (12) of a vehicle (11), piece detecting means for detecting a signal indicative of passing of said magnetic piece, rotation detector means (22) for detecting rotation of said wheel from said detected signal, and battery means for supplying electric power to said rotation detector means, characterized by:
said piece detecting means comprising induction means (19) magnetically coupled with said magnetic piece for operatively generating electromagnetic induction so that said detected signal is defined by an electric signal of said electromagnetic induction;
said battery means comprising a rechargeable battery (24); and
charging circuit means (23) for charging said rechargeable battery with electric energy of said electromagnetic induction.

2. The charging apparatus according to claim 1, wherein said induction means comprises a coil (19).

3. The charging apparatus according to claim 1, wherein said rechargeable battery also supplies electric power to other circuits of the charging apparatus, as well as said rotation detector means.

4. The charging apparatus according to claim 1, further comprising computing means (22) for computing speed and/or travelled distance of said vehicle based on the detected rotation of said wheel, and display means (27) for displaying results of said computing.

5. The charging apparatus according to claim 1, wherein said vehicle comprises a bicycle (11).

6. A charging apparatus (18) comprising a magnetic piece (14) attached to a wheel (12) of a vehicle (11), piece detecting means for detecting a signal indicative of passing of said magnetic piece, rotation detector means (22) for detecting rotation of said wheel from said detected signal, and battery means for supplying electric power to said rotation detector means, characterized by:
said piece detecting means comprising induction means (19) magnetically coupled with said magnetic piece for operatively generating electromagnetic induction so that said detected signal is defined by an electric signal of said electromagnetic induction;
said battery means comprising a rechargeable battery (24); and
charging circuit means for charging said rechargeable battery (23) with electric energy of said electromagnetic induction only when the rotation of said wheel detected by said rotation detector means indicates a speed faster than a predetermined speed.

7. The charging apparatus according to claim 6, wherein said induction means comprises a coil.

8. The charging apparatus according to claim 6, wherein said rechargeable battery also supplies electric power to other circuits of the charging apparatus, as well as said rotation detector means.

9. The charging apparatus according to claim 6, further comprising computing means (22) for computing speed and/or travel led distance of said vehicle based on the detected rotation of said wheel, and display means (27) for displaying results of said computing.

10. The charging apparatus according to claim 6, wherein said vehicle comprises a bicycle.

11. A charging apparatus (18) comprising a magnetic piece (14) attached to a wheel (12) of a vehicle (11), piece detecting means for detecting a signal indicative of passing of said magnetic piece, transmitter means (32-37) for transmitting a radio signal in response to said detected signal, and battery means for supplying electric power to said transmitting means, characterized by:
said piece detecting means comprising induction means (19) magnetically coupled with said magnetic piece for operatively generating electromagnetic induction so that said detected signal is defined by an electric signal of said electromagnetic induction;
said battery means comprising a rechargeable battery (24); and
charging circuit means (23) for charging said rechargeable battery with electric energy of said electomagnetic induction.

12. The charging apparatus according to claim 11, wherein said induction means comprises a coil (19).

13. The charging apparatus according to claim 11, wherein said rechargeable battery also supplies electric power to other circuits of the charging apparatus, as well as said transmitter means.

14. The charging apparatus according to claim 11, further comprising receiver means (38) for receiving said radio signal, computing means (22) for computing a speed and/or travelled distance of said vehicle based on said received radio signal, and display means (44) for displaying results of said computing.

15. A charging apparatus according to claim 11, wherein said vehicle comprises a bicycle.

16. A charging apparatus (18) comprising a magnetic piece (14) attached to a wheel (12) of a vehicle (11), piece detecting means for detecting a signal indicative of passing of said magnetic piece, transmitter means (32-37) for transmitting a radio signal in response to said detected signal, and battery means for supplying electric power to said transmitter means, characterized by:
said piece detecting means comprising induction means (19) magnetically coupled with said magnetic piece for operatively generating electromagnetic induction so that said detected signal is defined by an electric signal of said electromagnetic induction;
said battery means comprising a rechargeable battery (24); and
charging circuit means (23) for charging said rechargeable battery with electric energy of said electromagnetic induction when rotation of said wheel indicates a speed faster than a predetermined speed.

17. The charging apparatus according to claim 16, wherein said induction means comprises a coil (19).

18. The charging apparatus according to claim 16, wherein said rechargeable battery also supplies electric power to other circuits of the charging apparatus, as well as said transmitter means.

19. The charging apparatus according to claim 16, further comprising receiver means (38) for receiving said radio signal, computing means (22) for computing a speed and/or travelled distance of said vehicle based on said received radio signal, and display means (27) for displaying results of said computing.

20. A charging apparatus according to claim 16, wherein said vehicle comprises a bicycle.
